Europäisches Patentamt

European Patent Office

Office européen des brevets

(11) Veröffentlichungsnummer: **0 234 453 B1**

(12) **EUROPÄISCHE PATENTSCHRIFT**

(45) Veröffentlichungstag der Patentschrift: **28.08.91**

(51) Int. Cl.⁵: **H04L 12/40, H04L 25/02**

(21) Anmeldenummer: **87102078.0**

(22) Anmeldetag: **13.02.87**

(54) **Schaltungsanordnung zur seriellen Datenübertragung zwischen mehreren Teilnehmerstellen.**

(30) Priorität: **17.02.86 DE 3604967**

(43) Veröffentlichungstag der Anmeldung:
**02.09.87 Patentblatt 87/36**

(45) Bekanntmachung des Hinweises auf die
Patenterteilung:
**28.08.91 Patentblatt 91/35**

(84) Benannte Vertragsstaaten:
**AT BE CH DE ES FR GB GR IT LI NL SE**

(56) Entgegenhaltungen:
**FR-A- 2 229 328**
**FR-A- 2 363 240**

**ELECTRONIC ENGINEERING, Band 53, Heft
658, Oktober 1981, Seiten 81-85, London, GB;
R. BURGESS: "RS 422 and beyond"**

**ELECTRONICS, Band 47, Nr. 11, Mai 1974,
Seiten 119-120; T. BRUINS: "Data transmission is faster with ternary coding"**

**ELECTRICAL DESIGN NEWS, Band 17, Heft 6,
März 1982, Seiten 44-46; D. PIPPINGER: "Line
drivers are not limited to computer systems"**

(73) Patentinhaber: **Siemens Aktiengesellschaft
Wittelsbacherplatz 2
W-8000 München 2(DE)**

(72) Erfinder: **Lang, Otto, Ing. grad.
Reschreiterstrasse 17
W-8000 München 45(DE)**
Erfinder: **Dombrowski, Manfred, Ing. grad.
Geroltstrasse 36
W-8000 München 2(DE)**

## Beschreibung

Die Erfindung bezieht sich auf eine wie im Oberbegriff des Patentanspruches 1 angegebene Schaltungsanordnung zur seriellen Datenübertragung zwischen mehreren Teilnehmerstellen.

Derartige Anordnungen sind auch Gegenstand der gleichzeitig eingereichten EP-A-0 235 648 und EP-A-0 235 649.

Eine derartige Schaltungsanordnung ist ebenfalls aus D. Pippinger: "Linedrivers are not limited to computer systems", Electronic Design News, Band 17, Heft 6, 3/82, Seiten 44-46, bekannt, wenn man davon ausgeht, daß es üblich ist, in einer Anordnung der dort gezeigten Art den Bus reflexionsfrei abzuschließen. Die bekannte Schaltungsanordnung dient zur seriellen Datenübertragung zwischen mehreren Teilnehmerstellen. Die Teilnehmerstellen enthalten jeweils eine Erkennungsschaltung, die zwischen einem belegten und einem nicht belegten Bus unterscheiden kann. Die Erkennungsschaltung enthält ein retriggerbares Monoflop, das über einen Sensor-Verstärker an den Datenbus angeschlossen ist. Die Erkennungsschaltung überwacht die Übertragungsstrecke und liefert ein Sperrsignal an den örtlichen Treiber, wenn auf dem Bus Daten einer anderen Teilnehmerstelle übertragen werden. Sind keine fremden Daten auf der Strecke, so gibt das Monoflop den Treiber frei.

Auf diese Weise können die Teilnehmerstellen von sich aus auf den Bus zugreifen, wenn dieser nicht durch eine andere Teilnehmerstelle belegt ist. Hierzu ist jedoch ein relativ großer Aufwand erforderlich. Außerdem hat das bei der bekannten Schaltungsanordnung vorgesehene retriggerbare Monoflop eine bestimmte Zeitkonstante, die dafür sorgt, daß der Treiber solange gesperrt bleibt, wie weitere Datenimpulse zu erwarten sind und die daher dazu führt, daß der Treiber unnötig lange blockiert sein kann.

Weiterhin ist durch die Zeitschrift Elektronik 6/23.3.1984, Seite 24 und 12/15.6.1984, Seiten 97 und 98 eine Schaltungsanordnung mit Schnittstellenbausteinen bekannt. Die Schnittstellenbausteine dienen zur seriellen Datenübertragung, bestehen jeweils aus einem Datensender und einem Datenempfänger und sind für Vollduplex- oder HalbduplexBetrieb geeignet. Bei Halbduplex-Betrieb ist in jeder Teilnehmerstelle der Ausgang des Datensenders unmittelbar mit dem Eingang des Datenempfängers verbunden. Die Teilnehmerstellen, die z.B. ein Rechner und daran angeschlossene Peripheriegeräte sein können, sind an einen Datenbus angeschlossen. In jeder Teilnehmerstelle lassen sich der Datensender und der Datenempfänger durch Steuersignale in einen aktiven oder in einen passiven Zustand steuern.

Ferner ist aus dem Datenbuch von Texas Instruments, Interface Circuits, Ausgabe 1980, Seite 388 eine Schaltungsanordnung mit Schnittstellenbausteinen bekannt, bei der der Bus an beiden Enden mittels eines Widerstandes in der Größe des Wellenwiderstandes abgeschlossen ist. Ein solcher Widerstand ist im Verhältnis zu den ausgangsseitigen Innenwiderständen inaktiver Datensender so klein, daß die Spannung zwischen den Adern des Datenbusses wenigstens näherungsweise den Wert Null hat.

Da bei einer Schaltungsanordnung der eingangs genannten Art die Sender im aktiven Zustand an ihrem Ausgang eine niederohmige Spannungsquelle darstellen, deren Spannung vom Logikpegel des an den Eingang angelegten Datensignals abhängt, kann zu jedem Zeitpunkt immer nur ein Datensender aktiv sein.

Man kann zu diesem Zweck das Steuersignal, das den Datensender einer Teilnehmerstelle aktiv steuert, zu allen anderen Teilnehmern übertragen und dort dazu verwenden, eine Aktivsteuerung für die Zeit der Belegung des Datenbusses unmöglich zu machen. Dabei liegt es nahe, die Steuersignale über Steuerleitungen oder über einen Steuerbus zu übertragen, der zusätzlich zum Datenbus vorgesehen ist.

Aufgabe der Erfindung ist es, eine wie im Oberbegriff des Patentanspruches 1 angegebene Schaltungsanordnung so auszubilden, daß eine gegenseitige Steuerung der Teilnehmerstellen ohne Zuhilfenahme zusätzlicher Steuerleitungen mit Hilfe vergleichsweise einfach realisierbarer Mittel über den Datenbus selbst erfolgt.

Bei einer wie im Oberbegriff des Patentanspruches 1 angegebenen Schaltungsanordnung sind bei nicht belegtem Datenbus alle Datensender an ihrem Ausgang hochohmig. Ausgehend von der Erkenntnis im Rahmen der Erfindung, daß dieser hochohmige Tristate-Zustand dazu ausnutzbar ist, ein Kriterium für den Belegungszustand des Datenbusses zu gewinnen, wird die Schaltungsanordnung zur Lösung der genannten Aufgabe in der im kennzeichnenden Teil des Patentanspruches 1 angegebenen Weise ausgebildet. Dabei können die Datensender unmittelbar oder mittelbar, insbesondere mittels Übertragungseinrichtungen, die mit Modems versehen sind, mit den Teilnehmerstellen verbunden sein.

Die Last, mit der der Datenbus an wenigstens einer Stelle belastet ist, kann durch Abschlußwiderstände, Eingangswiderstände der Erkennungsschaltungen und/oder andere Lastwiderstände gebildet sein. Insbesondere besteht die Last ganz oder teilweise aus Abschlußwiderständen in der Größe des Wellenwiderstandes der Datenleitung, mit denen die Datenleitung im Hinblick auf eine hohe Bitrate der zu übertragenden Datensignal versehen ist.

Die Datensender können so beschaffen sein, daß sie jeweils an dem einen Ausgangsanschluß ein positives und am anderen Ausgangsanschluß ein negatives Potential gegenüber Bezugspotential bzw. Masse haben. Es gibt andererseits Datensender, die im aktivierten Zustand an einem der beiden Ausgangsanschlüsse eine erste vorgegebene Spannung und am anderen der beiden Ausgangsanschlüsse eine zweite, gegenüber der ersten größere vorgegebene Spannung gleicher Polarität gegen Bezugspotential haben, so daß sich ebenfalls unterschiedlich gepolte Ausgangsspannungen ergeben. Dieser Art sind insbesondere Datensender von Schnittstellen-Bausteinen, die für die Schnittstellen RS485, RS422 oder dergleichen konzipiert sind. Die Schnittstelle RS485 ist für Halbduplex-Betrieb über einen Zweidraht-Datenbus, die Schnittstelle RS422 für Voll- oder Halbduplex-Betrieb über einen Vierdraht-Datenbus bekannt.

Durch die genannten Maßnahmen ergibt sich der Vorteil, daß die Teilnehmerstellen mit einfach realisierbaren Mitteln Aufschluß über den Belegungszustand des Datenbusses gewinnen, ohne daß hierzu ein eigener Steuerbus erforderlich ist und die Teilnehmerstelle unnötig lange blockiert werden kann. Besonders vorteilhaft läßt sich das Belegtsignal zur Steuerung eines oder mehrerer Modems verwenden, in der Weise, daß der Sender des Modems bzw. die Sender der Modems in Abhängigkeit vom Belegungszustand des Datenbusses in den aktiven oder passiven Zustand gesteuert werden. Belegt ein Modem den Datenbus, so werden die Datensender aller anderen Modems selbsttätig aktiv gesteuert, ohne daß hierzu Umschaltevorrichtungen mit aufwendigen Steuereinrichtungen erforderlich sind.

Die Erkennungsschaltung kann durch ein ungepoltes Relais gebildet sein, dessen Wicklung an die beiden Adern des Datenbusses angeschlossen ist und das dann anspricht, wenn ein Datensender aktiv ist. Da die Wicklung des Relais den Datenbus belastet, kann sich am Datenbus dann keine für eine Erregung des Relais ausreichende Spannung aufbauen, wenn alle Datensender inaktiv sind und daher an ihrem Ausgang einen vergleichsweise hochohmigen Innenwiderstand aufweisen. Ist dagegen ein Datensender aktiv, so ergibt sich zwischen den Adern des Datenbusses eine Spannung, die entsprechend den zu übertragenden Daten ihre Polarität laufend wechselt. Da das Relais nicht gepolt ist, spricht es trotzdem an.

In weiterer Ausgestaltung der Erfindung wird die Schaltungsanordnung in der im kennzeichnenden Teil des Patentanspruchs 3 angegebenen Weise ausgebildet. Dabei wird der Datenbus durch die Dioden der Optokoppler so belastet, daß sich bei nicht aktiven Datensendern am Datenbus keine Spannung aufbauen kann, die zu einem Ansprechen der Optokoppler führen könnte. Ist dagegen ein Datensender aktiv, so bildet sich am Datenbus eine Spannung wechselnder Polarität aus. Je nach Polarität des betreffenden Impulses spricht jeweils der eine oder andere Optokoppler an.

Bei den Ausführungen nach Patentanspruch 2 oder 3 stellen die Erkennungsschaltungen selbst eine Belastung des Datenbusses dar, die eine sichere Funktion der Erkennungsschaltung gewährleistet. Gegebenenfalls können am Datenbus zusätzliche Belastungen, insbesondere Abschlußwiderstände vorhanden sein.

Ist der Datenbus an wenigstens einer Stelle mit einem Abschlußwiderstand versehen, so kann in weiterer Ausgestaltung der Erfindung die Erkennungsschaltung durch ein Exklusiv-ODER-Glied gebildet sein. Das Exklusiv-ODER-Glied kann dabei an seinem Eingang vergleichsweise hochohmig sein.

Eine Teilnehmerstelle darf nicht auf den Datenbus zugreifen, wenn dieser bereits durch einen anderen Teilnehmer belegt ist. Hat eine Teilnehmerstelle den Datenbus belegt, so stellt dies die Erkennungsschaltung fest. In diesem Fall steht der Datenbus jedoch dieser Teilnehmerstelle nach wie vor zur Verfügung.

Enthält die Teilnehmerstelle selbst keine Vorrichtung, die im betrachteten Betriebszustand eine Selbstabschaltung der Teilnehmerstelle verhindert, so ist es zweckmäßig, ein Belegtkriterium nur dann an die Teilnehmerstelle weiter zu geben, wenn der Datenbus durch eine andere Teilnehmerstelle belegt ist.

Da in den Teilnehmerstellen die Datensender mit Hilfe von Steuersignalen aktiviert werden, stehen mit diesen Steuersignalen Kriterien darüber zur Verfügung, ob eine festgestellte Belegung des Busses gegebenenfalls von der betreffenden Teilnehmerstelle selbst herrührt. So läßt sich durch eine gemeinsame Auswertung oder Verknüpfung des Steuersignals und des Belegtkriteriums feststellen, ob der Datenbus durch die betreffende oder durch eine andere Teilnehmerstelle belegt ist. Zweckmäßigerweise wird die Schaltungsanordnung dabei in der im Anspruch 5 angegebenen Weise ausgebildet.

Die UND-Schaltung - je nach Art der Steuerschaltung mit oder ohne nachgeschalteter Negierung - sperrt das Kriterium "Datenbus belegt", wenn die betreffende Teilnehmerstelle selbst den Datenbus belegt hat.

Eine Anordnung, die in vorteilhafter Weise Störungen bzw. durch Umschaltvorgänge entstehende Nadelimpulse eliminiert, ergibt sich in weiterer Ausgestaltung der Erfindung aus den Maßnahmen nach Anspruch 6. Dabei dient der Schmitt-Trigger zugleich als UND-Glied.

Die Maßnahmen nach Anspruch 7 haben den Vorteil, daß der Schmitt-Trigger zugleich Störungen eliminiert und die gewünschte UND-Verknüpfung bzw. NAND-Verknüpfung realisiert.

Die Erfindung wird anhand der in den Figuren dargestellten Ausführungsbeispiele näher erläutert.

Es zeigen

Fig. 1    eine Schaltungsanordnung zur seriellen Datenübertragung zwischen mehreren über einen Datenbus miteinander verbundenen Digital- und Übertragungsbaugruppen mit Relais enthaltenden Erkennungsschaltungen,

Fig. 2    eine Erkennungsschaltung mit Optokoppler und

Fig. 3    von einer Schaltungsanordnung zur seriellen Datenübertragung eine Digitalbaugruppe mit einem Exklusiv-ODER-Glied in der Erkennungsschaltung.

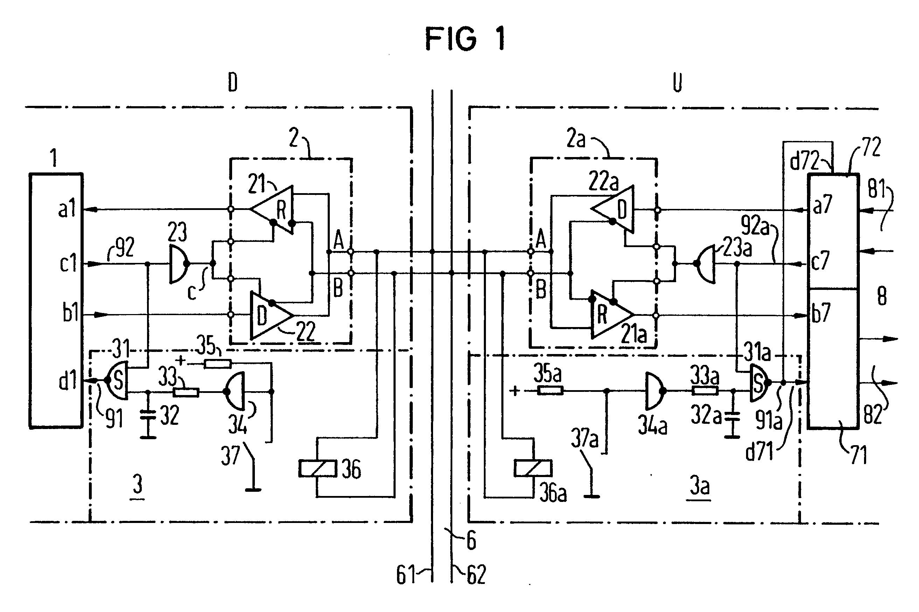

Fig. 1 zeigt eine Schaltungsanordnung zur seriellen Datenübertragung. Der zweiadrige Bus 6 verbindet mehrere Baugruppen eines Fernwirkgerätes oder einer Fernwirkeinrichtung, von denen in der Figur die Digitalbaugruppe D und die Übertragungsbaugruppe U dargestellt sind. Die beiden Adern 61 und 62 des Datenbusses 6 werden außer zur Datenübertragung auch zur Übermittlung von Steuersignalen ausgenutzt, die zur gegenseitigen Steuerung der Baugruppen dienen.

Die Digitalbaugruppe D ist eine Einrichtung zur Ablaufsteuerung und enthält als Teilnehmerstelle 1 einen durch einen Mikroprozessor gesteuerten USART 1, den Schnittstellenbaustein 2 und die Erkennungsschaltung 3.

Die Übertragungsbaugruppe U enthält das an die vierdrähtige NF-Übertragungsleitung 8 angeschlossene Modem 7 mit Sender 71 und Empfänger 72, den Schnittstellenbaustein 2a und den Signalempfänger 3a. Das Modem 7 besteht z.B. aus einem FM-Sender und einem FM-Empfänger. Die NF-Übertragungsleitung 8 führt zu wenigstens einer weiteren Teilnehmerstelle und ist im beschriebenen Beispiel Bestandteil eines Fernwirknetzes mit mehreren Stationen bzw. weiteren Teilnehmerstellen. Die Übertragungsleitung ist eine Vierdrahtleitung, bestehend aus der ankommenden Leitung 81 und der abgehenden Leitung 82. Gegebenenfalls kann anstelle der Vierdrahtleitung eine Zweidrahtleitung Verwendung finden. In diesem Fall sind der Sender 71 und der Empfänger 72 an die Zweidrahtleitung anzuschließen.

An die beiden Adern 61 und 62 des Busses 6 können weitere Digital- und/oder Übertragungsbaugruppen angeschlossen werden. Weitere Digitalbaugruppen können insbesondere Vorrichtungen zur Meldungsein- oder ausgabe sein. Weitere Übertragungsbaugruppen können dazu dienen, die von einer Digitalbaugruppe oder von einer Übertragungsbaugruppe an den Bus 6 abgegebenen seriellen Daten an weitere Übertragungsleitungen und daran angeschlossenen Stationen weiterzugeben.

Als Schnittstelle zwischen den Baugruppen und dem Datenbus 6 dient eine für eine derartige Multipoint-Buskonfiguration geeignete Schnittstelle, bei der die Datensender 22 bzw. 22a im nichtaktiven Zustand an ihrem Ausgang hochohmig sind. Eine solche Schnittstelle ist insbesondere die Schnittstelle RS485.

Der Datenbus 6 kann - abweichend von Fig. 1 - in bekannter Weise an seinen beiden Enden jeweils durch einen Widerstand zwischen den beiden Adern 61, 62 mit seinem Wellenwiderstand abgeschlossen sein. Alle Teilnehmerstellen liegen über eine in den Figuren nicht dargestellte Masseverbindung auf gemeinsamem Massepotential.

Zum Anschluß an den Datenbus 6 sind die Baugruppen, von denen in der Figur eine Digitalbaugruppe D und eine Übertragungsbaugruppe U dargestellt sind, jeweils mit einem Schnittstellenbaustein 2 bzw. 2a versehen, der z.B. vom Typ SN75176a sein kann.

Bei dem Schnittstellenbaustein 2 der Digitalbaugruppe D sind die Ausgangsanschlüsse A und B des Datensenders 22 unmittelbar mit dem Eingang des Datenempfängers 21 verbunden. Der Anschluß A ist an die Ader 61, der Anschluß B an die Ader 62 des Datenbusses 6 geführt.

Der Datensender 22 und der Datenempfänger 21 sind jeweils mit ihren Steueranschlüssen an die gemeinsame Steuerleitung C geführt und lassen sich durch Steuersignale wechselweise aktiv und passiv steuern, so daß zu ein und demselben Zeitpunkt jeweils nur der Datensender 22 oder der Datenempfänger 21 aktiv sein kann.

Der Schnittstellenbaustein 2a der Übertragungsbaugruppe U ist wie der Schnittstellenbaustein 2 der Digitalbaugruppe D aufgebaut. Der Ausgang des Datensenders 22a ist unmittelbar mit dem Eingang des Datenempfängers 21a verbunden. Der Datensender 22a und der Datenempfänger 21a sind jeweils mit ihren Steueranschlüssen an die gemeinsame Steuerleitung Ca geführt.

Der Schnittstellenbaustein 2 der Digitalbaugruppe D ist an den USART 1 angeschlossen. Der Schnittstellenbaustein 2a der Übertragungsbaugruppe U ist mit dem Modem 7 verbunden.

Die Schnittstellenbausteine 2 und 2a stellen Pegelwandler dar, die auf der dem Datenbus 6 abgewandten Seite mit TTL-Pegel betrieben werden. Im Schnittstellenbaustein 2 ist je nach logischem Zustand des an der Steuerleitung C angelegten TTL-Logikpegel der Datenempfänger 21 aktiviert und der Datensender 22 passiv oder umgekehrt. In entsprechender Weise ist bei dem Schnittstellenbaustein 2a abhängig vom Logikpegel des an der Steuerleitung Ca angelegten Steuersignals der Datenempfänger 21a aktiviert und der Datensender 22a passiv oder umgekehrt.

Es kann andererseits zweckmäßig sein, in der Digitalbaugruppe D nur den Datensender 22 über die Steuerleitung C zu steuern und den Datenempfänger 21 immer eingeschaltet zu lassen. Damit kann das von der Digitalbaugruppe D auf den Bus 6 gesendete Datensignal gleichzeitig zur Kontrolle ausgewertet werden.

In der Digitalbaugruppe D ist der Ausgang des Datenempfängers 21 an den Dateneingang a1 des USART 1 geführt. An den Datenausgang b1 des USART 1 ist der Eingang des Datensenders 22 angeschlossen. Der Steuereingang des Datenempfängers 21 und der Steuereingang des Datensenders 22 sind unmittelbar miteinander und mit der Steuerleitung c verbunden. Der Steuerausgang c1 des USART 1 ist über den Inverter 23 an die Steuerleitung c des Schnittstellenbausteins 2 geführt.

Die Erkennungsschaltung 3 enthält das nicht polarisierte Relais 36, dessen Wicklung unmittelbar an die Adern des Datenbusses 6 angeschlossen ist. Der Kontakt 37 des Relais 36 ist ein Arbeitskontakt. Dieser Arbeitskontakt liegt auf der einen Seite an Masse und ist auf der anderen Seite über den Widerstand 35 an die positive Hilfsspannung bzw. Versorgungsspannung + geführt. Am Verbindungspunkt von Kontakt 37 und Widerstand 35 liegt der Eingang des Inverters 34. Das nicht gepolte Relais 36 spricht unabhängig von der Richtung des Erregerstromes an.

Der Ausgang des Inverters 34 ist über ein RC-Glied, bestehend aus dem Widerstand 33 und dem Kondensator 32 an den Signaleingang des Schmitt-Triggers 31 geführt. Ein Steuereingang des Schmitt-Triggers 31 ist an den Steuerausgang c1 des USART 1 angeschlossen.

Die beiden Eingänge des Schmitt-Triggers 31 sind nach Art eines UND-Gliedes miteinander verknüpft. Der invertierende Ausgang des Schmitt-Triggers 31 ist über die Steuerleitung 91 an den Steuereingang d1 des USART 1 geführt.

Die Erkennungsschaltung 3a enthält das nicht polarisierte Relais 36a, dessen Wicklung unmittelbar an die Adern des Datenbusses 6 angeschlossen ist. Der Kontakt 37a des Relais 36a ist ein Arbeitskontakt. Dieser Arbeitskontakt liegt auf der einen Seite an Masse und ist auf der anderen Seite über den Widerstand 35a an die positive Hilfsspannung bzw. Versorgungsspannung + geführt. Am Verbindungspunkt von Kontakt 37a und Widerstand 35a liegt der Eingang des Inverters 34a.

Der Ausgang des Inverters 34a ist über ein RC-Glied, bestehend aus dem Widerstand 33a und dem Kondensator 32a an den Signaleingang des Schmitt-Triggers 31a geführt. Ein Steuereingang des Schmitt-Triggers 31 a ist an den Steuerausgang c7 des Modems 7 angeschlossen.

Die beiden Eingänge des Schmitt-Triggers 31a sind nach Art eines UND-Gliedes miteinander verknüpft. Der invertierende Ausgang des Schmitt-Triggers 31a ist über die Steuerleitung 91a an die Steuereingänge d71 und d72 des Modems 7 geführt.

Als Datensender 21 und Datenempfänger 22 bzw. Datensender 21a und Datenempfänger 22a kann z.B. ein Schnittstellenbaustein vom Typ SN 75176 A oder µA 96176 Verwendung finden.

Beim Senden der in Fig. 1 gezeigten Fernwirkstation liegen die Sendedaten am Ausgang b1 des USART 1 an, werden in dem als Treiber dienenden Datensender 22 des Schnittstellenbausteins 2 auf den Schnittstellenpegel umgesetzt, über die Leitungen 61 und 62 des Datenbusses 6 zum Datenempfänger 21a des Schnittstellenbausteins 2a der Übertragungsbaugruppe U geleitet, von diesem auf TTL-Pegel umgesetzt und an den Eingang b7 des im Modem 7 enthaltenen Senders 71 abgegeben.

Im Empfangszustand der Fernwirkstation liegen die Empfangsdaten am Ausgang a7 des im Modem 7 enthaltenen Empfängers 72 an, werden im Datensender 22a des Schnittstellenbausteins auf Schnittstellenpegel umgesetzt, über die Adern 61, 62 des Datenbusses 6 zum Datenempfänger 21 des Schnittstellenbausteins 2 geleitet, von diesem auf TTL-Pegel umgesetzt und an den Dateneingang a1 des USART 1 abgegeben.

Der Tristate-Zustand des RS485-Datenbusses 6, entsprechend einem Logikpegel 0 auf einer Steuerleitung C bzw. Ca, signalisiert den angeschlossenen Baugruppen, daß sie auf den Datenbus zugreifen können. Greift eine Baugruppe auf den Datenbus 6 zu, so nimmt der Datenbus einen Nicht-Tristate-Zustand an. Die Auswertung dieses Zustandes führt in den weiteren Baugruppen zur Bildung eines Steuersignals, welches die Steuerleitung 91 bzw. 91a auf Logikpegel 0 schaltet und damit den Zugriff aller übrigen Baugruppen auf den Bus sperrt. Außerdem steuert dieses Steuersignal die Übertragungsbaugruppe(n) so, daß deren Sender 71 zur Übertragungsleitung 8 hin aktiv werden und daß deren Empfänger 72 gesperrt werden.

Der USART kann z.B. vom Typ SAB 8251 A sein.

Die Steuerung der Schnittstellenbausteine über den Bus 6 umfaßt die folgenden Betriebszustände:

a) Ist der Datenbus 6 nicht belegt, d.h. befinden sich alle Datensender 22, 22a im hochohmigen Tristate-Zustand, so nehmen die beiden Adern 61 und 62 des Datenbusses 6 ein etwa annähernd gleiches Potential an, da sie über den Widerstand des Relais 36 miteinander verbunden sind. Dieser Widerstand - gegebenenfalls in Verbindung mit einer weiteren Last - ist, bezogen auf die sehr hochohmigen Ausgangswiderstände inaktiver Datensender, selbst bei großer Windungszahl, vergleichsweise niederohmig. Die Relais 36, 36a befinden sich im Ruhezustand, ihre Kontakte 37, 37a sind geöffnet.

Dabei ergibt sich am Eingang der CMOS-Inverter 34 bzw. 34a jeweils eine Spannung, der der Logikpegel 1 entspricht. Die Ausgänge der Inverter 34 und 34a haben daher Logikpegel O. Damit ist der Ausgang des SchmittTriggers 31 bzw. 31a - unabhängig von dem Logikpegel des an seinen Steuereingang geführten Steuersignals - auf Logikpegel 1 geschaltet.

In der Digitalbaugruppe D und gegebenenfalls in weiteren Digitalbaugruppen signalisiert die logische 1 auf der Steuerleitung 91 dem USART 1, daß der Datenbus 6 nicht belegt ist. In diesem Fall ist auch die NF-Übertragungsleitung 8 des Fernwirknetzes nicht belegt. In der Übertragungsbaugruppe U und gegebenenfalls in weiteren Übertragungsbaugruppen steuert die logische 1 auf der Steuerleitung 91a den Empfänger 72 auf Empfang und sperrt den Sender 71.

b) Ist der Datenbus 6 durch die Digitalbaugruppe D belegt, so schaltet in der belegenden Digitalbaugruppe der Steuerausgang c1 des USART 1 die daran angeschlossene Steuerleitung 92 auf die logische 0. Der Inverter 23 aktiviert den Datensender 22. Der Ausgang des Datensenders 22 ist daher niederohmig. Je nach logischem Zustand am Datenausgang b1 des USART 1 wird über den Datenbus 6 eine logische 1 oder eine logische 0 übertragen.

Die beiden vorgegebenen Spannungen, die die Ausgangsanschlüsse (A, B) der Datensender (22, 22a) gegen Bezugspotential annehmen können, haben die gleiche Polarität. Im Falle der Schnittstelle RS485 liegt bei Logikpegel 1 am Ausgangsanschluß A des Schnittstellenbausteins 2 z.B. die Spannung 3,7 V und am Ausgangsanschluß B z.B. die Spannung 1,1 V gegen Masse. Bei Logikpegel 0 liegt am Ausgangsanschluß A z.B. die Spannung 1,1 V und am Ausgangsanschluß B z.B. die Spannung 3,7 V. Somit liegt bei aktiviertem Schnittstellenbaustein und dadurch belegtem Bus 6 grundsätzlich eine der beiden Adern 61 oder 62 auf dem niedrigen Potential z.B. 1,1 V und die andere Ader auf dem hohen Potential von z.B. 3,7 V. Die Spannungsdifferenz bewirkt, daß das Relais 36a anspricht. In allen Baugruppen schalten daher die Ausgänge der Inverter 34 bzw. 34a auf Logikpegel 1.

In der aktiven Digitalbaugruppe D wird dieses Signal nicht weitergegeben, da der Schmitt-Trigger 31 durch eine logische 0 vom Steuerausgang c1 des USART 1 gesperrt ist.

Im betrachteten Betriebszustand sind gegebenenfalls vorgesehene weitere, in der Figur nicht dargestellte Digitalbaugruppen dagegen nicht aktiv, so daß die Schmitt-Trigger durch eine logische 1 geöffnet werden. Somit steuert dort die logische 1 am Ausgang des Inverters über den nachgeschalteten Schmitt-Trigger die Steuerleitung auf die logische 0, meldet dem USART, daß der Datenbus 6 von einer anderen Baugruppe belegt ist und sperrt damit den Zugriff auf den Datenbus 6.

In der Übertragungsbaugruppe U und gegebenenfalls in weiteren Übertragungsbaugruppen steuert die logische 1 am Ausgang des Inverters 34a über den nachgeschalteten Schmitt-Trigger 31a die Steuerleitung 91a auf Logikpegel 0, sperrt damit den Empfänger 72 und schaltet den Sender 71 ein.

c) Ist der Datenbus 6 durch die Übertragungsbaugruppe U belegt, so empfängt der Empfänger 72 über die NF-Leitung 8 ein Telegramm aus dem Fernwirknetz. Die Steuerleitung 92a schaltet auf die logische 0, sperrt damit den Schmitt-Trigger 31a und aktiviert über den Inverter 23a den Datensender 22a, so daß dieser auf den Datenbus 6 arbeitet. Entsprechendes gilt für eine weitere Übertragungsbaugruppe, falls diese anstelle der Übertragungsbaugruppe U den Datenbus 6 belegt.

In der am Datenbus 6 angeschlossenen Digitalbaugruppe D erkennt das Relais 36 den Belegtzustand und der Inverter 34 sperrt durch eine logische 0, die über die Steuerleitung 91 zum Steuersignaleingang d1 des USART 1 gelangt, für den USART 1 den Zugriff auf den Bus 6. Dasselbe gilt gegebenenfalls für weitere am Bus 6 angeschlossene Digitalbaugruppen.

Sind weitere Übertragungsbaugruppen U am Bus 6 angeschlossen, so erkennt deren Relais den Belegtzustand und der Inverter 34 bzw. 34a schaltet über den nachgeschalteten Schmitt-Trigger 31 bzw. 31a den Empfänger 72 aus und den Datensender 71 ein.

Mit Hilfe der Schaltungsanordnung lassen sich auf besonders einfache Weise Verzweigungsfunktionen in Übertragungsnetzen realisieren, ohne daß zwischen den Übertragungsbaugruppen zusätzliche logische Verknüpfungen oder Steuersignalleitungen erforderlich sind.

In Abwandlung der gezeigten Schaltungsanordnung kann es ferner zweckmäßig sein, den Empfänger nicht je nach Belegtzustand des Datenbusses aktiv oder passiv zu steuern sondern ständig empfangsbereit zu halten, indem sein Steuereingang fest an Massepotential gelegt wird.

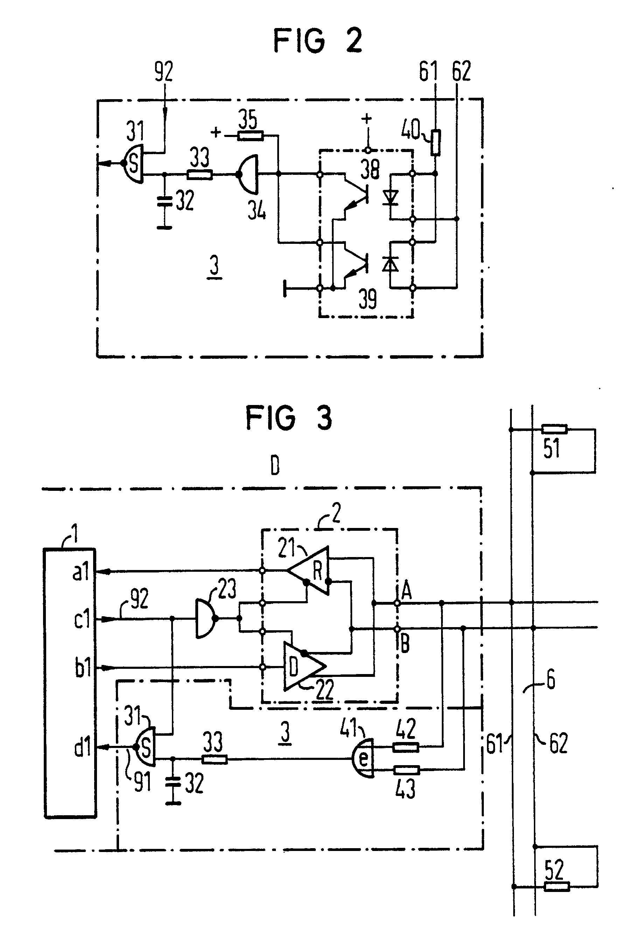

Fig. 2 zeigt eine Erkennungschaltung, die in der Schaltungsanordnung zur seriellen Datenübertragung nach Fig. 1 jeweils anstelle der Erkennungschaltung 3 bzw. 3a Verwendung finden kann. Die Erkennungschaltung 3 der Digitalbaugruppe D enthält die Optokoppler 38 und 39, deren antiparallel geschaltete Eingänge über den Widerstand 40 an die Adern 61 und 62 des Datenbusses 6 angeschlossen sind. Die einpolig an Masse liegenden Ausgänge der Optokoppler 38 und 39 sind nach Art einer ODER-Verknüpfung zusammengeschaltet und an den Eingang des Inverters 34 geführt.

Werden über den Datenbus 6 Daten übertragen, so spricht jeweils eine der beiden antiparallel geschalteten Dioden an, die eine bei Zeichenlage und die andere bei Trennlage. Ist einer der beiden Optokoppler durchgeschaltet, so meldet der Inverter 34, daß der Datenbus 6 belegt ist.

Bei der Schaltungsanordnung zur seriellen Datenübertragung nach Fig. 3 sind nur eine Digitalbaugruppe und der Datenbus dargestellt. Weitere Digital- oder Übertragungsbaugruppen ergeben sich aus den in Fig. 1 dargestellten Baugruppen dadurch, daß als Erkennungsschaltung 3 bzw. 3a eine solche nach Fig. 3 Verwendung findet. Die Erkennungsschaltung 3 enthält das Exklusiv-ODER-Glied 41, dessen Eingänge über einen Widerstand 42 bzw. 43 an die Adern 61 bzw. 62 des Datenbusses 6 angeschlossen sind. Der Ausgang des Exklusiv-ODER-Gliedes 41 ist über das RC-Glied 32, 33 an den Schmitt-Trigger 31 geführt.

An den Datenbus 6 sind Widerstände 51 und 52 angeschlossen. Diese Widerstände sind so bemessen, daß die Adern 61 und 62 des Datenbusses 6 bei passiven Datensendern praktisch ein- und dasselbe Potential annehmen. Als Widerstände 51 und 52 dienen insbesondere Abschlußwiderstände, die - vorzugsweise in den Teilnehmerstellen am Ende der Leitung - den Datenbus in bekannter Weise mit seinem Wellenwiderstand abschließen, um eine Datenübertragung mit vergleichsweise hoher Bitrate zu ermöglichen. Das Exklusiv-ODER-Glied 41 ist insbesondere ein C-MOS-Verknüpfungsglied, das als solches vergleichsweise hochohmige Eingänge hat, und dessen Umschaltpegel an den Eingängen etwa bei der Hälfte der insbesondere 5 V betragenden Versorgungsspannung liegt.

Haben beide Adern 61 und 62 des Datenbusses 6 gleiches Potential, so erkennt das Exklusiv-ODER-Glied, daß der Datenbus 6 frei ist. Sind die Potentiale an den Datenleitungen 61 und 62 verschieden voneinander, so meldet das Exklusiv-ODER-Glied 41, daß der Datenbus 6 belegt ist.

**Patentansprüche**

1. Schaltungsanordnung zur seriellen Datenübertragung zwischen wenigstens zwei Teilnehmerstellen, mit wenigstens zwei Datensendern (22, 22a), die mit ihren Ausgangsanschlüssen (A, B) an ein und denselben, zwei Adern (61, 62) aufweisenden Datenbus (6) angeschlossen sind, jeweils mit einem Steuereingang an eine Steueranordnung (1, 23; 7, 23a) angeschlossen und mittels einer Erkennungsschaltung (3), die den Frei- oder Belegtzustand des Datenbusses erkennt, über die Steueranordnung derart steuerbar sind, daß immer höchstens einer der Datensender (22, 22a) aktiviert ist, wobei die Datensender im aktivierten Zustand jeweils in Abhängigkeit vom Zustand eines an ihren Eingang angelegten Datensignals eine Spannung erster oder zweiter Polarität an den Datenbus (6) abgeben, wobei die Datensender (22, 22a) im passiven Zustand am Ausgang einen größeren Innenwiderstand haben als im aktiven Zustand und wobei an den Datenbus (6) wenigstens ein Datenempfänger (21, 21a) angeschlossen ist, der nach Art eines Differenzverstärkers an seinem Ausgang bei vorhandener Eingangsspannung abhängig von deren Polarität einen von zwei vorgegebenen Signalzuständen annimmt, wobei der Datenbus (6) an wenigstens einer Stelle mit einer zwischen den beiden Adern (61, 62) wirksamen Last belastet ist, die so beschaffen ist, daß die Spannung zwischen den Adern des Datenbusses (6) bei nicht aktiven Datensendern (22, 22a) wenigstens näherungsweise den Wert Null hat, **dadurch gekennzeichnet,** daß wenigstens einer der Steueranordnungen eine Erkennungsschaltung (3) vorgeschaltet ist, die an ihrem Ausgang bei wenigstens annähernd gleichen Spannungen an den Adern (61, 62) des Datenbusses (6) ein Freisignal mit einem ersten logischen Zustand und bei anderen Spannungen an den Leitungen (61, 62) des Datenbusses (6) ein Belegtsignal mit einem zweiten logischen Zustand an die Steueranordnung (1, 23; 7, 23a) abgibt.

2. Schaltungsanordnung nach Anspruch 1, **dadurch gekennzeichnet,** daß die Erkennungsschaltung durch ein ungepoltes Relais gebildet ist.

3. Schaltungsanordnung nach Anspruch 1, **dadurch gekennzeichnet,** daß die Erkennungsschaltung jeweils zwei Optokoppler (38, 39; 38a, 39a) enthält, deren Eingänge in Antiparallelschaltung an den Datenbus angeschlossen sind und deren Ausgänge gleichsinnig parallel geschaltet sind und daß die Parallelschaltung über einen Widerstand (35, 35a) an eine Gleichspannungsquelle angeschlossen ist, und daß die Serienschaltung aus Optokopplern (38, 39; 38a, 39a) und Widerstand (35, 35a) Bestandteil einer Auswerteanordnung ist, die an ihrem Ausgang bei gleichen Logikpegeln an den Eingängen der Erkennungsschaltung (3, 3a) ein Freisignal mit einem ersten logischen Zustand und bei ungleichen Logikpegeln an den Eingängen der Erkennungsschaltung (3, 3a) ein Belegtsignal mit einem zweiten logischen Zustand an die Steueranordnung (1, 23; 7, 23a) abgibt.

4. Schaltungsanordnung nach Anspruch 1, wobei der Datenbus (6) an wenigstens einer Stelle mit einem Abschlußwiderstand versehen ist, **dadurch gekennzeichnet,** daß die Erkennungsschaltung durch ein Exklusiv-ODER-Glied gebildet ist.

5. Schaltungsanordnung nach einem der Ansprüche 1 bis 4, **dadurch gekennzeichnet,** daß einem Steuereingang der dem zugeordneten Datensender (22, 22a) vorgeschalteten Teilnehmerstelle jeweils ein UND-Glied vorgeschaltet ist, das mit einem ersten Eingang an die Erkennungsschaltung angeschlossen ist und dessen zweiter Eingang zusammen mit dem bestreffenden Datensender (22, 22a) durch die Teilnehmerstelle derart steuerbar ist, daß das UND-Glied nur bei passiv gesteuertem Datensender (22, 22a) vorbereitet ist.

6. Schaltungsanordnung nach Anspruch 3, **dadurch gekennzeichnet,** daß der Ausgang der Auswerteanordnung über ein RC-Glied (33, 32) an einen Schmitt-Trigger (31) geführt ist.

7. Schaltungsanordnung nach Anspruch 3 und 4, **dadurch gekennzeichnet,** daß der Schmitt Trigger (31) als UND-Glied ausgebildet ist.

**Claims**

1. Circuit arrangement for serial data transmission between at least two subscriber points, with at least two data transmitters (22, 22a), which are connected by their output terminals (A, B) to one and the same data bus (6) having two wires (61, 62), each output being connected by a control input to a control arrangement (1, 23; 7, 23a) and can be controlled by means of a detection circuit (3), which detects whether the databus is ready or busy, via the control arrangement in such a manner that not more than one of the data transmitters (22, 22a) can ever be activated, such that any of the data transmitters which is in the activated state transmits a voltage of first or second polarity to the data bus (6), depending in each case on the state of a data signal applied to its input, such that the data transmitters (22, 22a) have a greater internal resistance at the output in the passive state than in the active state, and such that at least one data receiver (21, 21a) is connected to the data bus (6), the output of which receiver assumes one of two specified signal states in the presence of an input voltage, depending on the polarity of the latter, in the manner of a differential amplifier, the data bus (6) being loaded at at least one point with a real load between the two wires (61, 62), the load being provided such that the voltage between the data bus (6) wires is at least approximately zero when the data transmitters (22, 22a) are not activated, characterised in that at least one of the control arrangements has a detection circuit (3) connected in series with its input, the output of which emits a ready signal, at a first logic state, to the control arrangement (1, 23; 7, 23a) if the voltages on the wires (61, 62) of the data bus (6) are at least approximately equal, and a busy signal, at a second logic state, if other voltages are present on the lines (61, 62) of the data bus (6).

2. Circuit arrangement according to Claim 1, characterised in that the detection circuit consists of a non-polarized relay.

3. Circuit arrangement according to Claim 1, characterised in that the detection circuit contains two optocouplers (38, 39; 38a, 39a) each, whose inputs are connected in an anti-parallel circuit to the data bus and whose outputs are connected in parallel, in the same sense, and in that the parallel circuit is connected via a resistor (35, 35a) to DC voltage source, and in that the series circuit of the opto-couplers (38, 39; 38a, 39a) and the resistor (35, 35a) is a component of an assessment arrangement, which emits a ready signal, at a first logic state, at its output to the control arrangement (1, 23; 7, 23a) if equal logic levels are applied to the inputs of the detection circuit (3, 3a) and a busy signal, at a second logic state, if the logic levels at the inputs to the detection circuit (3, 3a) are not equal.

4. Circuit arrangement according to Claim 1, the data bus (6) being provided with a terminating resistor at at least one point, characterised in that the detection circuit is formed by an exclusive-OR element.

5. Circuit arrangement according to one of Claims 1 to 4, characterised in that in each case an AND element is connected in series to a control input to the subscriber point that is itself connected in series with the input to the associated data transmitter (22, 22a), a first input of the AND element being connected to the detection circuit and whose second input can be controlled by the subscriber point together with the associated data transmitter (22, 22a) such that the AND element is enabled only when the data transmitter (22, 22a) is controlled to be passive.

6. Circuit arrangement according to Claim 3, characterised in that the output of the assessment arrangement is fed via an RC element (33, 32) to a Schmitt trigger (31).

7. Circuit arrangement according to Claims 3 and 4, characterised in that the Schmitt trigger (31) is configured as an AND element.

**Revendications**

1. Montage pour la transmission de données en série entre au moins deux postes d'abonnés, comportant au moins deux émetteurs de données (22,22a), dont les bornes de sortie (A,B) sont raccordées à un même bus de transmission de données (6) comportant deux conducteurs (61,62), sont raccordées respectivement par une entrée de commande à un dispositif de commande (1,23;7,23a) et peuvent être commandées par l'intermédiaire du dispositif de commande, au moyen d'un circuit d'identification (3), qui identifie l'état libre ou occupé du bus de transmission de données, de telle sorte qu'en permanence au maximum l'un des émetteurs de données (22,22a) est activé, et dans lequel ces émetteurs de données délivrent, à l'état activé, une tension possédant une première ou une seconde polarité au bus de transmission de données (6), respectivement en fonction de l'état d'un signal de données appliqué à leur entrée, les émetteurs de données (22,22a) à l'état passif possèdent, sur leur sortie, une résistance interne plus élevée qu'à l'état actif, et au bus de transmission de données (6) est raccordé au moins un récepteur de données (21,21a), qui prend à sa sortie, à la manière d'un amplificateur différentiel, l'un de deux états de signaux prédéterminés, lors de la présence d'une tension d'entrée, en fonction de la polarité de cette dernière, le bus de transmission de données (6) étant chargé, en au moins un emplacement, par une charge qui agit entre les deux conducteurs (61,62) et est créée de manière que la tension entre les conducteurs du bus de transmission de données (6) possède au moins approximativement la valeur nulle lorsque les émetteurs de données (22,22a) ne sont pas actifs, caractérisé par le fait qu'en amont d'au moins l'un des dispositifs de commande est branché un circuit d'identification (3), qui délivre sur sa sortie, dans le cas où des tensions au moins approximativement égales sont appliquées aux conducteurs (61,62) du bus de transmission de données (6), un signal de libération possédant un premier état logique et, dans le cas de l'application d'autres tensions aux conducteurs (61,62) du bus de transmission de données (6), un signal d'occupation possédant un second état logique, au dispositif de commande (1,23;7,23a).

2. Montage suivant la revendication 1, caractérisé par le fait que le circuit d'identification est formé par un relais non polarisé.

3. Montage suivant la revendication 1, caractérisé par le fait que le circuit d'identification contient respectivement deux optocoupleurs (38,39; 38a,39a), dont les entrées sont raccordées selon un montage antiparallèle au bus de transmission de données et dont les sorties sont branchées en parallèle dans le même sens, et que le branchement en parallèle est raccordé, par l'intermédiaire d'une résistance (35,35a), à une source de tension continue, et que le circuit série formé d'optocoupleurs (38,39; 38a, 39a) et d'une résistance (35,35a) fait partie d'un dispositif d'évaluation, qui, pour des niveaux logiques identiques aux entrées du circuit d'identification (3,3a), délivre à sa sortie un signal de libération possédant un premier état logique et, dans le cas de la présence de niveaux logiques différents au niveau des entrées du circuit d'identification (3,3a), envoie un signal d'occupation possédant un second état logique au dispositif de commande (1,23; 7,23a).

4. Montage suivant la revendication 1, dans lequel le bus de transmission de données (6) comporte, en au moins un emplacement, une résistance de terminaison, caractérisé par le fait que le circuit d'identification est formé par un circuit OU-Exclusif.

5. Montage suivant l'une des revendications 1 à 4, caractérisé par le fait qu'en amont d'une entrée de commande du poste d'abonné branché en amont de l'émetteur associé de données (22,22a) est branché respectivement un circuit ET, qui est raccordé par une première entrée au circuit d'identification, et dont la seconde entrée peut être commandée, conjointement avec l'émetteur considéré de données (22,22a), par le poste d'abonné de manière que le circuit ET soit préparé uniquement lorsque l'émetteur de données (22,22a) est commandé à l'état passif.

6. Montage suivant la revendication 3, caractérisé par le fait que la sortie du dispositif d'évaluation est raccordée, par l'intermédiaire d'un circuit RC (33,39), à un déclencheur de Schmitt (31).

7. Montage suivant les revendications 3 et 4, Caractérisé par le fait que le déclencheur de Schmitt (31) est réalisé sous la forme d'un circuit ET.

# FIG 1

EP 0 234 453 B1

## FIG 2

## FIG 3